# EUROPÄISCHE PATENTSCHRIFT

(11) **EP 3 383 657 B1**
(45) Veröffentlichungstag und Bekanntmachung des Hinweises auf die Patenterteilung: **30.06.2021**
(21) Anmeldenummer: 16801824.0
(22) Anmeldetag: 29.11.2016
(51) Int. Cl.: B29C 70/74, B29C 70/76, B29C 64/10, B33Y 10/00, B33Y 80/00

(54) **VERFAHREN ZUR HERSTELLUNG EINES KFZ-INNENAUSSTATTUNGSBAUTEILS**
PRODUCING A MOTOR VEHICLE INTERIOR TRIM COMPONENT
PROCÉDÉ POUR FABRIQUER UN ÉLÉMENT D'ÉQUIPEMENT INTÉRIEUR DE VÉHICULE AUTOMOBILE

(30) Priorität: 30.11.2015 AT 510232015
(43) Veröffentlichungstag der Anmeldung: 10.10.2018
(73) Patentinhaber: Greiner Perfoam GmbH, 4550 Kremsmünster (AT)
(72) Erfinder: DRAXLER, Markus, 4040 Linz (AT); LIDAUER, Christian, 4614 Marchtrenk (AT)
(74) Vertreter: Burger, Hannes
(86) Internationale Anmeldenummer: PCT/EP2016/079155
(87) Internationale Veröffentlichungsnummer: WO 2017/093264

(56) Entgegenhaltungen:
- EP-A1- 2 801 512
- WO-A1-2012/166505
- WO-A1-2014/193961
- DE-A1-102013 217 825
- FR-A- 1 104 477
- US-A1- 2015 321 434

## Beschreibung

Die Erfindung betrifft ein Verfahren zur Herstellung eines Kfz-Innenausstattungsbauteils aus einem Grundkörper mit einer Oberseite und einer Unterseite, wobei auf dem Grundkörper ein Anbauelement auf Basis zumindest eines polymeren Kunststoffs angeordnet wird, das mittels eines 3D-Druclcverfahrens hergestellt wird.

Aktuell werden Anbauteile auf Kfz-Innenausstattungsbauteile der Automobilindustrie, wie Hutablagen, Ladeböden, Seiten- und Türverkleidungen, mit verschiedensten Verfahren, wie Schweißen (Ultraschall-, Reib-, Infrarotschweißen), Kleben, Nieten, Schrauben, Verclipsen, etc., aufgebracht. Dazu ist es erforderlich, dass die Anbauteile zuvor in einem Werkzeug, z.B. einem Spritzgusswerkzeug, einem Extrusionswerkzeug, etc., hergestellt und anschließend mit einem zusätzlichen Schritt auf das Kfz-Innenausstattungsbauteil aufgebracht werden.

Die WO 2014/193961 A1 beschreibt gemäß dem Oberbegriff des Anspruchs 1 ein Verfahren zum Herstellen einer Fahrzeugverkleidungskomponente umfassend das Aufbringen einer Sichtfläche einer dekorativen Schicht auf eine Stützfläche einer Platte einer sogenannten Additive Manufacturing Fertigungsanlage. Das Verfahren umfasst auch das Anordnen von Material auf einer hinteren Oberfläche der Dekorschicht über einen Druckkopf der Anlage.

Der vorliegenden Erfindung liegt die Aufgabe zugrunde, ein Verfahren zur Herstellung von Kfz-Innenausstattungsbauteilen mit Anbauelementen anzugeben.

Gelöst wird die Aufgabe der Erfindung mit dem eingangs genannten Verfahren, bei dem der Grundkörper zumindest im Bereich, in dem das Anbauelement aufgedruckt wird, vor dem Aufdrucken des Anbauelementes erwärmt wird. Es kann damit die Haftung des Anbauelementes am Grundkörper verbessert werden. Weiter kann damit besser vermieden werden, dass der Werkstoff für das Anbauelement nach dessen Applikation auf dem Grundkörper zu rasch abkühlt und dadurch Störstellen im Anbauelement entstehen.

Von Vorteil ist weiter, dass das Anbauelement frei hinsichtlich Form und Farbe sowie hinsichtlich der verwendeten Kunststoffbasis hergestellt werden kann. Es sind also mit dem Verfahren ohne Änderung der maschinellen Ausrüstung unterschiedlichste Anbauelemente herstellbar. Gegebenenfalls können auch mehrere Anbauelemente in einem Arbeitsschritt hergestellt werden. Darüber hinaus ist die Ausbildung von sehr schmalen Anbauelementen problemlos möglich, die mit anderen Verfahren nur mit sehr hohem Aufwand herstellbar sind. Das Anbauelement kann in einem Schritt hergestellt und auf den Rohling für das Kfz-Innenausstattungsbauteil aufgebracht und gegebenenfalls mit diesem verbunden werden. Es ist damit eine entsprechende Kostenreduktion realisierbar. Eine weitere Kostenreduktion wird durch den Entfall bzw. die Reduktion von Entwicklungskosten und den Entfall von Werkzeugkosten für Spritzgusswerkzeuge, Extrusionswerkzeuge, Schäumwerkzeuge, etc., Transportkosten, erreichbar. Obwohl dieses Verfahren also sehr gut für Einzelanfertigungen einsetzbar ist, kann es trotzdem auch in der (Groß-)Serienfertigung angewandt werden, sodass also die bedarfsorientierte Produktion vereinfacht werden kann. Darüber hinaus kann damit die Beschaffung der Kfz-Innenausstattungsbauteile durch den Kunden vereinfacht werden, indem er die Daten für die Herstellung des Anbauelementes, d.h. seine spezifische gewünschte Form und dessen Farbe sowie die Situierung auf dem Kfz-Innenausstattungsbauteil, etc., in das System des Herstellers des Kfz-Innenausstattungsbauteil einspielt. Zusammen mit Daten der Kapazitätsauslastung beim Hersteller kann damit auch der Lieferzeitpunkt bestimmt oder gegebenenfalls sogar vom Kunden vorgegeben werden. Durch das Einspielen der Kundendaten kann damit das Kfz-Innenausstattungsbauteil gegebenenfalls auch völlig automatisch ohne weitere Eingriffe durch den Hersteller gestartet werden, sodass letztere nur noch die Bereitstellung der Rohstoffe in ausreichendem Ausmaß sicherstellen muss.

Bevorzugt werden als Anbauelemente als Befestigungselemente, Halteelemente, Verstärkungselemente, akustisch wirksame Elemente, optische Elemente, dämpfende oder ausgleichende Elemente hergestellt, die sichtbar angebracht werden können, da - wie bereits erwähnt - die Form (sofern diese nicht ausschließlich technisch bedingt ist) und die Farbe der Anbauelemente frei wählbar sind. Diese Anbauteile müssen daher nicht mehr versteckt werden, sondern können an die Platzbedürfnisse in einem Kfz angepasst auch im Kfz sichtbar auf dem Grundkörper hergestellt werden. Mit anderen Worten ausgedrückt können die Anbauelemente an deren Verwendung besser angepasst hergestellt werden.

Aus diesen Gründen ist es auch möglich, dass das Anbauelement auf der Oberseite oder der Unterseite des Grundkörpers hergestellt wird. Dies hat zudem den Vorteil, dass die Fertigung der Anbauelemente vereinfacht werden kann, da diese Oberflächen des Grundkörpers in der Regel besser zugänglich sind.

Zur besseren Anbindung des Anbauelementes an den Grundkörper, d.h. zur ausreißfesteren Verbindung damit, kann nach einer Ausführungsvariante vorgesehen sein, dass das Anbauelement den Grundkörper stirnseitig zumindest teilweise umgreifend hergestellt wird, sodass ein Formschluss ausgebildet wird. Das Anbauelement kann dabei zusätzlich die Funktion eines Kantenschutzes übernehmen.

Ebenfalls zur Verbesserung der Verbindung des Anbauelementes mit dem Grundkörper kann vorgesehen werden, dass in zumindest einer Stirnfläche des Grundkörpers eine, insbesondere hinterschnittene, Nut ausgebildet wird und das Anbauelement bis in die Nut reichend hergestellt wird. Durch die Hinterschneidung kann ein Formschluss erreicht werden, der zu einer weiteren Verbesserung der Verbindung des Anbauelements mit dem Grundkörper führen kann.

Sofern das Anbauelement an der Oberseite oder an der Unterseite des Grundkörpers angebracht wird, ist es aus denselben Gründen von Vorteil, wenn in den Grundkörper eine Ausnehmung eingebracht wird und das Anbauelement beginnend in der Ausnehmung hergestellt wird, wobei gemäß einer Ausführungsvariante dazu vorgesehen werden kann, dass die Ausnehmung mit einer Hinterschneidung hergestellt wird, wodurch die Ausreißfestigkeit des Anbauelementes weiter verbessert werden kann.

Besonders vorteilhaft ist es, wenn nach einer anderen Ausführungsvariante der Grundkörper aus einer Kernschicht hergestellt wird, auf der beidseitig jeweils zumindest eine Deckschicht aufgebracht wird und über den Teil des Anbauelementes der in der Ausnehmung angeordnet wird, die beiden Deckschichten miteinander verbunden werden. Es können damit die erforderlichen Auszugskräfte zur Entfernung des Anbauelementes deutlich erhöht werden.

Weiter kann vorgesehen werden, dass am Beginn das Aufdrucken des Anbauelementes auf den Grundkörper mit einer ersten Temperatur und am Ende mit einer zweiten Temperatur erfolgt, wobei die erste Temperatur höher ist als die zweite Temperatur. Durch diese Ausführungsvariante kann erreicht werden, dass zu Beginn des Aufbaus des Anbauelementes das Kunststoffbasismaterial für das Anbauelement besser fließt, wodurch die Nachbildung der Kontur des Grundkörpers im Bereich, in dem das Anbauelement angeordnet werden soll, einfacher und mit höherer Genauigkeit erfolgen kann. Durch das dazu relativ kühlere Aufbringen des Kunststoffbasismaterials am Ende des 3D-Drucks kann wiederum der ortsgenaue Druck verbessert werden, sodass also die Konturen nicht "verschwimmen" sondern die Formgebung für das Anbauelement mit einer höheren Präzision erfolgen kann. Durch die verringerte Fließbewegung des Kunststoffbasismaterials am Ende des Auftrags des Anbauelementes kann zudem die Programmierung des Anbauelementes vereinfacht werden, da Einflussfaktoren auf die formgetreue Abscheidung des Anbauelementes reduziert werden können. Diese Ausführungsvariante ist insbesondere auch von Vorteil in Kombination mit der voranstehend beschriebenen Ausführungsvariante, bei der eine (hinterschnittene) Nut oder eine (hinterschnittene) Ausnehmung ausgebildet, da durch das verbesserte Fließen des Kunststoffbasismaterials für das Anbauelement die Nut oder die Ausnehmung oder die Hinterschneidung einfacher und mit höherer Sicherheit mit dem Kunststoffbasismaterial ausgefüllt werden kann.

Nach einer Ausführungsvariante dazu kann vorgesehen sein, dass das Aufdrucken des Anbauelementes auf den Grundkörper unter Anwendung eines Temperaturgradienten zwischen der ersten Temperatur und der zweiten Temperatur erfolgt, wodurch eine langsamere Absenkung der Temperatur über die Zeit erreicht werden kann. Es können damit Fehler im Aufbau des Anbauelementes, die gegebenenfalls durch zu hohe Temperaturunterschiede während der Abscheidung entstehen können, besser vermieden werden.

Es ist auch möglich, dass aus einem zweiten Werkstoff in dem Anbauelement zumindest ein Verstärkungselement mittels 3D-Druck ausgebildet wird. Auch bei dieser Ausführungsvariante zeigt sich wiederum die Stärke des Verfahrens, da durch die Flexibilität hinsichtlich der Form und der Position derartige Verstärkungselemente einfach und an die Bedürfnisse besser angepasst in das Anbauelement eingebaut werden können. Es sind dabei auch nichtlineare Ausführungen von derartigen Verstärkungselementen einfacher realisierbar.

Andererseits ist es mit dem Verfahren aber auch relativ einfach möglich, das Anbauelement mit einem Härtegradienten herzustellen. Es ist damit eine Ausführung des Anbauelementes einfacher darstellbar, bei der der an den Grundkörper anschließende Bereich des Anbauelementes härter und der äußere Endbereich des Anbauelementes dazu relativ weicher ist oder umgekehrt. Durch diese Ausgestaltung des Anbauelementes kann damit die Anlage des Kfz-Innenausstattungsbauteils an ein weiteres Bauteil verbessert werden, da die Konturen des weiteren Bauteils durch das im Anlagebereich weichere Anbauelement von diesem besser abgebildet werden können. Anderseits lässt sich damit aber auch die akustische Wirkung des Anbauelementes einfach anpassen.

Zum besseren Verständnis der Erfindung wird diese anhand der nachfolgenden Figuren näher erläutert.

Es zeigen jeweils in vereinfachter, schematischer Darstellung:
- Fig. 1: ein erstes Kfz-Innenausstattungsbauteil in Fronansicht;
- Fig. 2: ein zweites Kfz-Innenausstattungsbauteil in Draufsicht;
- Fig. 3: ein drittes Kfz-Innenausstattungsbauteil in Stirnseitenansicht;
- Fig. 4: einen Ausschnitt aus einem Kfz-Innenausstattungsbauteil im Querschnitt;
- Fig. 5: einen Ausschnitt aus einem anderen Kfz-Innenausstattungsbauteil im Querschnitt;
- Fig. 6: einen Ausschnitt aus einem weiteren Kfz-Innenausstattungsbauteil im Querschnitt;
- Fig. 7: eine Druckvorrichtung zur Herstellung des Anbauelementes auf dem Grundkörper des Kfz-Innenausstattungsbauteils;
- Fig. 8: einen Ausschnitt aus einer Produktionslinie zur Herstellung eines Kfz-Innenausstattungsbauteils.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

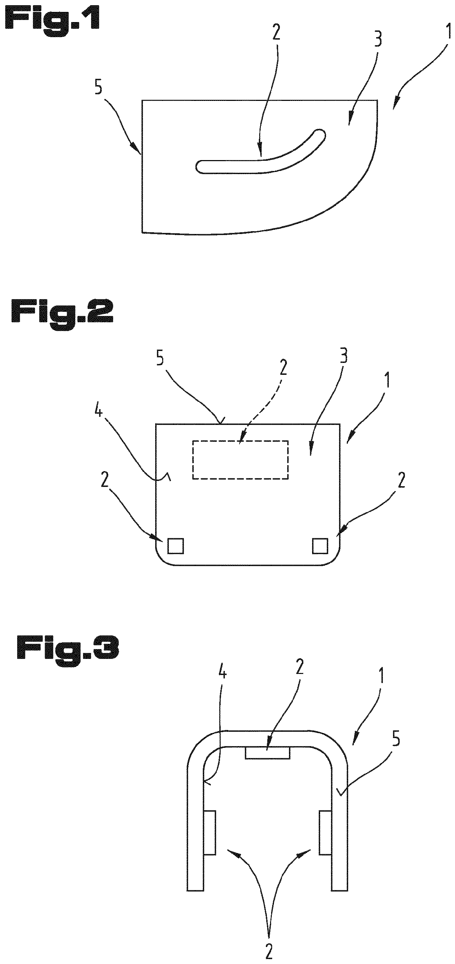

In den Fig. 1 bis 3 sind verschiedene Kfz-Innenausstattungsbauteile 1 dargestellt. So zeigt Fig. 1 eine innere Türverkleidung, Fig. 2 einen Ladeboden und Fig. 3 eine Schallisolierung für einen Motorraum. Diese Kfz-Innenausstattungsbauteile 1 stehen stellvertretend für eine Reihe weiterer Kfz-Innenausstattungsbauteile 1, wie beispielsweise Hutablagen, (Seiten)Verkleidung für einen Kofferraum oder eine Säule, beispielsweise die A-, B- oder C-Säule eines Kraftfahrzeuges. Zudem kann das Kfz-Innenausstattungsbauteil 1 auch ein Akustikbauteil für ein Kraftfahrzeug sein, mit dem beispielsweise der Lärmpegel im Fahrgastraum reduziert werden kann oder mit dem eine ganz bestimmte, beabsichtigte Geräuschkulisse im Fahrgastraum des Kfz erzeugt wird. Darüber hinaus kann das Kfz-Innenausstattungsbauteil 1 auch im Motorraum eines Kfz eingesetzt werden, z.B. für die Reduktion des Lärmpegels.

Die Darstellungen in den Fig. 1 bis 3 sind also nicht beschränkend für den Umfang der Erfindung zu verstehen.

Diesen Kfz-Innenausstattungsbauteilen 1 nach den Fig. 1 bis 3 ist gemein, dass sie zumindest ein Anbauelement 2 (Montageelement) aufweisen. Dieses zumindest eine Anbauelement 2 ist auf einer Oberseite und/oder einer Unterseite und/oder einer Stirnseite 5 eines Grundkörpers 6 des Kfz-Innenausstattungsbauteils 1 angeordnet und zumindest teilweise mit dem Grundkörper 6 verbunden.

Das Anbauelement 2 kann beispielsweise ein Türgriff (Fig. 1), ein Befestigungselement (Fig. 2 unten), ein Verstärkungselement auf einer äußeren Oberfläche des Kfz-Innenausstattungsbauteils (Fig. 2 strichliert) oder ein Akustikelement (Fig. 3) sein. Es sind aber auch andere Ausführungen von Anbauteilen 2, wie sie im Kfz-Bau eingesetzt werden, möglich, wie beispielsweise Haken, Ösen, Lautsprecheraufnahmen, Armlehnen, Achsen, Klammern, Puffer, Fixierelemente, wie z.B. Laschen, Einschübe, etc.,.

Das Anbauelement 2 besteht zumindest teilweise, insbesondere zur Gänze, aus zumindest einem polymeren Kunststoff. Dieser polymere Kunststoff kann ein Thermoplast, ein Duroplast oder ein Elastomer oder eine Mischung aus zumindest zwei dieser Kunststoffe sein. Beispielsweise kann als Kunststoff PA, PP, PET, ABS-PC, ABS, PLA, TPE, PUR, etc. verwendet werden. Vorzugsweise wird ein thermoplastischer Kunststoff eingesetzt, insbesondere ABS oder PP..

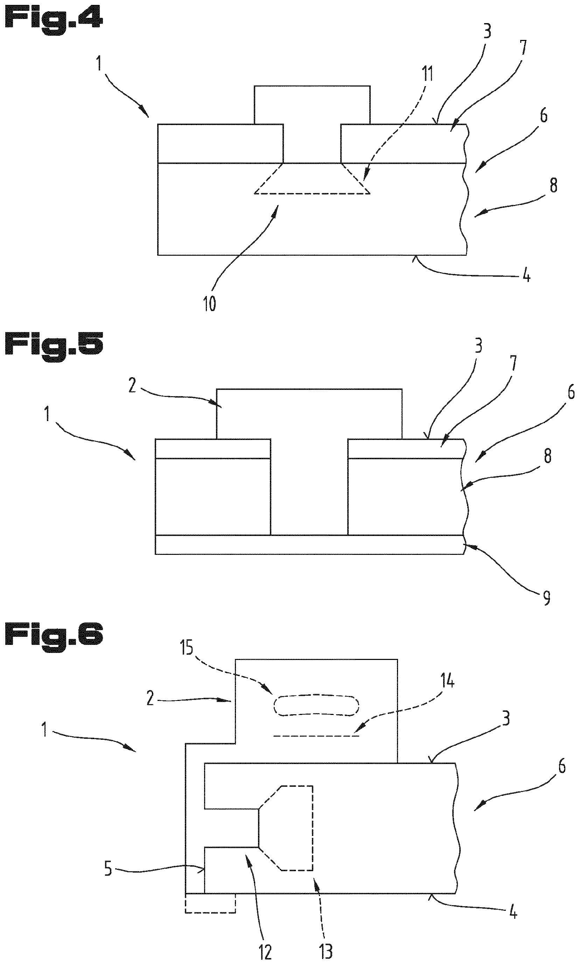

Der Grundkörper 6 des Kfz-Innenausstattungsbauteils 1 kann ein oder mehrschichtig ausgebildet sein. Beispielsweise kann der Grundkörper 6 zumindest eine Dekorschicht 7 auf der Oberseite 3 sowie eine unterhalb dieser Dekorschicht 7 angeordnete und bevorzugt mit dieser verbundene Kernschicht 8 aufweisen, wie dies in Fig. 4 gezeigt ist. Gegebenenfalls kann zwischen der Dekorschicht 7 und der Kernschicht 8 zumindest eine weitere Schicht angeordnet sein. Ebenso kann auf der Unterseite des Kfz-Innenausstattungsbauteils 1 eine weitere Dekorschicht 9 bei Bedarf angeordnet werden, wie dies aus Fig. 5 ersichtlich ist. Derartige Ausgestaltungen von Kfz-Innenausstattungsbauteilen 1 sind an sich bekannt.

Vorzugsweise weist der Grundkörper 6 zumindest eine Schicht auf, insbesondere die Kernschicht 5, die zumindest teilweise aus einem thermoplastischen und/oder duroplastischen Kunststoff besteht.

Im Rahmen der Erfindung sind beispielsweise Kernschichten 2 einsetzbar, die folgenden Aufbau aufweisen:
- erste Deckschicht, Schaumstoffschicht, zweite Deckschicht,
- erste Deckschicht, Wabenschicht, zweite Deckschicht,
- nur erste und/oder zweite Deckschicht.

Die erste und/oder die zweite Deckschicht bestehen vorzugsweise aus einem thermoplastischen und/oder duroplastischen Kunststoff. In diesem können gegebenenfalls die nachstehend genannten Verstärkungsfasern eingelagert sein.

Sofern der Grundkörper 6 einschichtig ausgebildet ist, ist die eine Schicht die Kernschicht 8.

Das Kfz-Innenausstattungsbauteil 1 kann einteilig ausgebildet sein, wie dies in Fig. 1 dargestellt ist. Ebenso besteht die Möglichkeit, dass dieses mehrteilig aus insbesondere über ein Filmscharnier miteinander verbundenen Teilen besteht, sodass das Kfz-Innenausstattungsbauteil 1 zusammenlegbar bzw. zusammenfaltbar ist.

Die Dekorschicht 7 und/oder die Dekorschicht 9 kann bzw. können beispielsweise durch einen Teppich, ein Vlies, einen Filz oder dergleichen gebildet sein. Die Kernschicht 8 kann durch einen Schaumstoff gebildet sein, beispielsweise einem Polyurethanschaum, wobei dieser Schaumstoff ein so genannter Neuschaum sein kann oder ein Verbundschaum, bei dem Schaumstoffpartikel aus Abfällen und Resten mit Neuschaum miteinander verbunden werden. Ebenso besteht die Möglichkeit, dass die Kernschicht 8 durch eine Wabenplatte, z.B. aus Karton und/oder Papier und/oder einem Kunststoff, insbesondere Polypropylen, zumindest teilweise gebildet ist bzw. kann diese Kernschicht 8 unter anderem auch durch eine Kunststoffschicht, insbesondere eine mit Fasern verstärkte, thermoplastische Kunststoffschicht, gebildet sein. Als Fasern können sowohl anorganische, beispielsweise Glasfasern, Kohlenstofffasern, als auch organische Fasern, beispielsweise Polyesterfasern, Naturfasern, etc. verwendet werden.

Mehrschichtige Kfz-Innenausstattungsbauteile 1 können durch aufeinander legen der einzelnen Schichten und einlegen dieses Schichtmaterials in eine Pressform mit anschließendem Verpressen hergestellt werden. Auch die Kernschicht 8 alleine kann entsprechend in Form gepresst werden.

Das zumindest eine Anbauelement 2 wird mittels 3D-Druck aus zumindest einem, gegebenenfalls geschmolzenen, polymeren Kunststoff hergestellt, wie dies nachstehend noch näher erläutert wird.

Die konkrete Form des Anbauelementes 2 richtet sich nach dem jeweiligen Verwendungszweck.

Fig. 4 zeigt einen Ausschnitt aus einem Kfz-Innenausstattungsbauteil 1. Dabei ist im Grundkörper 2, eine Ausnehmung 10 ausgebildet. Die Ausnehmung 10 reicht in der konkret dargestellten Ausführungsvariante von der Oberseite 3 durch die obere Dekorschicht 7 bis in die Kernschicht 8. Es ist aber auch möglich, dass die Ausnehmung 10 nur in der Dekorschicht 7 ausgebildet ist. Der Vollständigkeit halber sei angemerkt, dass die Ausnehmung 10 auch an der Unterseite 4 ausgebildet sein kann, falls das Anbauelement 2 an der Unterseite des Grundkörpers 2 angeordnet wird.

Wie weiter aus Fig. 1 strichliert zu ersehen ist, kann die Ausnehmung 10 auch mit einer Hinterschneidung 11 ausgeführt sein.

Bei dieser Ausführungsvariante des Kfz-Innenausstattungsbauteils 1 reicht das Anbauelement 2 bis in die Ausnehmung 10 und füllt diese vorzugsweise zur Gänze aus, wodurch eine bessere Verbindung mit dem Grundkörper 6 erreicht wird und damit die Abzugsfestigkeit bzw. Ausreißfestigkeit erhöht werden kann. Das Anbauelement 2 wird also beginnend in der Ausnehmung hergestellt.

Fig. 5 zeigt einen Ausschnitt aus einem Kfz-Innenausstattungsbauteil 1, bei dem - wie dies bereits voranstehend ausgeführt wurde - der Grundkörper 6 aus der Dekorschicht 7, der damit verbundenen Kernschicht 8 und der damit verbundenen Dekorschicht 9 besteht. Die Ausnehmung 10 erstreckt sich aber nicht nur bis in die Kernschicht 8 sondern reicht die Ausnehmung 10 von der Oberseite 3, d.h. der äußeren Oberfläche der Dekorschicht 7 bis zur oder bis in die die zweite Kernschicht 9. Die Ausnehmung 10 durchdringt also die Kernschicht 8 zur Gänze.

Das Anbauelement 2 reicht wiederum bis in die Ausnehmung 10 und füllt diese teilweise bzw. vorzugsweise zur Gänze aus. Jedenfalls reicht das Anbauelement 2, d.h. dessen Teil, der in dem Grundkörper 6 ausgebildet ist, von der Oberseite 3 bis zur unteren Dekorschicht 9, wodurch die beiden Dekorschichten 7, 9 über das Anbauelement 2 miteinander verbunden werden. Dies insbesondere deswegen, da das Anbauelement 2 aus einem, gegebenenfalls geschmolzenen, Kunststoff aufgedruckt wird und somit auch eine Verbindung mit den beiden Dekorschichten 7, 9 und gegebenenfalls der Kernschicht 8 eingehen kann. Es kann damit eine weitere Verbesserung der Verbindung mit dem Grundkörper 6 erreicht werden und damit die Abzugsfestigkeit bzw. Ausreißfestigkeit erhöht werden. Das Anbauelement 2 wird also auch bei dieser Ausführungsvariante beginnend in der Ausnehmung 10 hergestellt.

In einer Weiterführung dieser Ausführungsvariante des Kfz-Innenausstattungsbauteils 1 kann die Ausnehmung 10 sich durch den gesamten Querschnitt des Grundkörpers 6 erstreckend ausgebildet werden, sodass das Anbauelement 2 zumindest von der Oberseite 3 bis zumindest der Unterseite 4 reicht.

In Fig. 6 ist gezeigt, dass auch das Anbauelement 2 auch die Stirnseite 5 des Grundkörpers 6 des Kfz-Innenausstattungsbauteils 1 umgreifend angeordnet werden kann, wobei die Umgreifung soweit ausgebildet sein kann, dass sich das Anbauelement 2 von der Oberseite 3 über die Stirnseite 5 bis auf die Unterseite 4 erstreckt, wie dies strichliert angedeutet ist. Es kann damit ein Formschluss zwischen dem Anbauelement 2 und dem Grundkörper 6 ausgebildet weden. Um dies zu erreichen, kann der Grundkörper 6 und/oder eine Düse bzw. Düseneinheit des 3D-Druckers während des Druckens entsprechend bewegt/gedreht werden.

Weiter besteht die Möglichkeit, wie dies ebenfalls in Fig. 6 gezeigt ist, dass der Grundkörper 6 stirnseitig zumindest teilweise eine Ausnehmung 12, die insbesondere nutartig ausgeführt ist, aufweist, wobei das Anbauelement 2, das heißt der Kunststoff des Anbauelementes 2, bis in diese Ausnehmung 12 hineinreicht, wodurch die Verbindung zwischen dem Anbauelement 2 und dem Grundkörper 6 des Kfz-Innenausstattungsbauteils 1 verbessert werden kann. Die Ausnehmung 12 kann auch eine Hinterschneidung 13 aufweisen, beispielsweise zumindest annähernd mit einem schwalbenschwanzförmigen Querschnitt, wodurch der Verankerungs- und Verbindungseffekt zwischen dem Anbauelement 2 und dem Grundkörper 6 verbessert werden kann. Es ist jedoch prinzipiell möglich auch andere Querschnittsformen, beispielsweise einen rechteckförmigen oder einen quadratischen Querschnitt, für diese Ausnehmung 12 vorzusehen. Gleiches gilt für die Ausnehmung 10. Des Weiteren muss diese Ausnehmung 12 nicht zwingend nutartig sein, sondern können an diskreten Bereichen am Grundkörper 6 stirnseitig mehrere Ausnehmungen 12 angeordnet werden.

Das Kfz-Innenausstattungsbauteil 1 kann auch andere Querschnittsverjüngungen aufweisen, beispielsweise im Bereich der oder an einer Beschnittkante. Die Querschnittsverjüngung kann so ausgeführt sein, dass sich der Grundkörper 6 in Richtung auf die Stirnseite 5 verjüngt, also eine Absetzung aufweist. Es sei jedoch angemerkt, dass diese Form der Querschnittsverjüngung des Grundkörpers 6 nicht beschränkend ist. Insbesondere muss diese Querschnittsverjüngung nicht scharfkantig als Absetzung ausgebildet sein, sondern kann auch mit einer Rundung versehen sein. Weiter besteht die Möglichkeit, dass der Grundkörper 6 im Bereich der Beschnittkante abgeschrägt ist.

Die Absetzung kann bevorzugt an beiden einander gegenüberliegenden Oberflächen des Grundkörpers 6, also an der Oberseite 3 und auch an der dieser Oberseite 3 gegenüberliegenden Unterseite 4 ausgebildet sein, wobei auch nur eine dieser Oberflächen mit der Absetzung versehen sein kann. Die Absetzung kann beispielsweise durch die Entfernung der Dekorschicht 7 oder 9 in diesem Bereich (bzw. durch das Vorsehen einer Dekorschicht 7 oder 9 mit kleineren Abmessungen) erzeugt werden. Durch die Absetzung besteht die Möglichkeit, dass das Anbauelement 2 zumindest annähernd ebenflächig mit den beiden Oberflächen des Grundkörpers 6 abschließt.

Es besteht weiter die Möglichkeit, dass in dem Anbauelement 2 zumindest ein Verstärkungselement 14 und/oder Verstärkungsfasern (wie z.B. Carbonfasern, Glasfasern, Naturfasern, etc.) angeordnet bzw. eingebettet sind, wie dies in Fig. 6 strichliert angedeutet ist. Die Anzahl und die Lage und die Form dieser Verstärkungselemente 14 und/oder Verstärkungsfasern richtet sich dabei nach den mechanischen Anforderungen an das Kfz-Innenausstattungsbauteil 1. Es besteht weiter die Möglichkeit, dass das zumindest eine Verstärkungselement 14 Verstärkungsfasern aufweist.

Strichliert ist in Fig. 6 weiter angedeutet, dass in dem Anbauelement 2 auch zumindest ein Hohlraum 15 vorhanden sein kann. Durch diesen zumindest einen Hohlraum 15 kann dem Anbauelement 2 eine verringerte Steifigkeit verliehen werden, wodurch es beispielsweise Konturen, an denen es zur Anlage gelangt, besser nachformen kann, selbst wenn das Anbauelement 9 an sich aus einem härteren Kunststoff hergestellt wird. Zudem kann damit auch eine abdämpfende (beispielsweise schalldämpfende) Wirkung erzielt werden.

Es sei darauf hingewiesen, dass die voranstehend beschriebenen Ausführungsvarianten des Kfz-Innenausstattungsbauteils 1 hinsichtlich der Form und des Schichtaufbaus nicht beschränkend zu sehen sind, sondern lediglich erläuternden Charakter haben, wenngleich diese Ausführungsvarianten bevorzugte Ausführungsvarianten des Kfz-Innenausstattungsbauteils 1 sind.

Das Anbauelement 2 wird mit einem 3D-Druckverfahren aus einem polymeren Kunststoff hergestellt. Als polymerer Kunststoff kann ein voranstehend genannter Kunststoff mit oder ohne Verstärkungsfasern verwendet werden. Es ist aber auch möglich, dass das Anbauelement 2 aus mehr als einem Kunststoff hergestellt wird, indem beispielsweise verschiedene polymere Kunststoffe schichtweise aufgedruckt werden oder indem ein polymerer Kunststoff von einem weiteren polymeren Kunststoff zumindest teilweise abgedeckt wird, um beispielsweise eine bestimmte Oberflächenbeschaffenheit des Anbauelementes 2 zu erreichen, oder indem das voranstehend beschriebene zumindest eine Verstärkungselement 14 und/oder die Verstärkungsfasern ebenfalls aus einem polymeren Kunststoff hergestellt wird, der unterschiedlich ist, zum polymeren Kunststoff des restlichen Anbauelementes 2, insbesondere härter bzw. steifer. Das 3D-Druckverfahren hat hierbei den Vorteil, dass die unterschiedlichen polymeren Kunststoffe in einem Arbeitsschritt aufgedruckt werden können. Die Verstärkungsfasern können aber auch bereits in dem polymeren Kunststoff enthalten sein.

Falls das zumindest eine Verstärkungselement 14 vorgesehen und mittels des 3D-Druckverfahrens hergestellt wird, kann als polymerer Kunststoff hierfür ein Kunststoff verwendet werden, der ausgewählt ist aus einer Gruppe umfassend oder bestehend aus PP-Glasfasern, PA-Glasfasern, PP-Carbonfasern, PP-Naturfasern, etc..

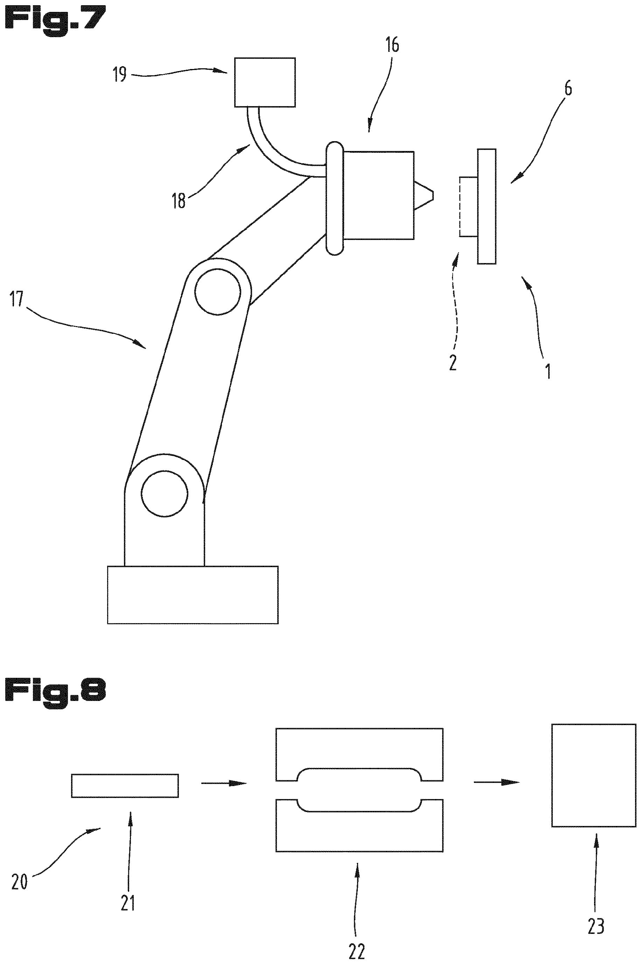

Wie in Fig. 7 schematisch dargestellt, wird nach dem 3D-Druckverfahren auf den Grundkörper 6 des Kfz-Innenausstattungsbauteils 1 mittels eines Druckkopfes 16 das Anbauelement 2 aus dem zumindest einen, gegebenenfalls geschmolzenen, polymeren Kunststoff hergestellt, indem der polymere Kunststoff auf den Grundkörper 6 an den entsprechenden Stellen (siehe voranstehende Beschreibung) aufgedruckt wird. Der Druckkopf 16 kann dazu auf einem Roboter 17 montiert sein. Weiter kann der Druckkopf 16 mehrdimensional beweglich ausgeführt sein bzw. angeordnet sein. Alternativ oder zusätzlich dazu ist es auch möglich das der Grundkörper 6 mit eine entsprechenden Haltevorrichtung, insbesondere mehrdimensional, beweglich gehalten wird.

Der Druckkopf 26 ist derart ausgebildet, dass er den zu druckenden Werkstoff in geringen, schichtförmigen Bahnen austragen kann, wozu der Druckkopf 26 Austragelemente aufweist, die hierfür entsprechend ausgebildet sind. Vorzugsweise kann der Druckkopf 26 geheizt und/oder gekühlt werden. Der Druckkopf 26 kann gegebenenfalls zur Verarbeitung von UVhärtenden Kunststoffen auch zumindest eine UV-Lampe aufweisen.

Der Druckkopf 16 ist über eine Leitung 18 mit zumindest einem Vorratsbehälter 19 verbunden. Im Vorratsbehälter 19 wird das Rohmaterial bzw. das Polymermaterial, aus dem das Anbauelement 2 hergestellt werden soll, vorrätig gehalten und aus diesem dem Druckkopf 16 zugeführt.

Wie strichliert in Fig. 7 angedeutet ist, wird das Anbauelement 2 schichtweise aufgebaut. Mittels entsprechender Daten, die der Recheneinheit des 3D-Druckers zur Verfügung gestellt werden, können dabei die gewünschten Konturen des Anbauelementes 2 hergestellt werden.

Das Anbauelement 2 kann, je nach Ausführung des Druckkopfes 16 und/oder des Bewegungsablaufes über seine Länge zur Gänze oder abschnittsweise schichtweise aufgebaut werden.

Als 3D-Druckverfahren wird insbesondere ein Verfahren mit geschmolzenem Material, wie FDM (Fused Deposition Modeling) oder mit UV-härtbarem Material, wie z.B. MJM (Multi-Jet-Modeling) angewandt. Es können aber auch andere 3D-Druckverfahren eingesetzt werden. Wie aus Fig. 8 ersichtlich ist, kann das 3D-Druckverfahren Teil einer Produktionslinie 20 zur (Serien-)Herstellung des Kfz-Innenausstattungsbauteils 1 sein.. Die Produktionslinie 20 kann in Produktionsrichtung eine erste Station 21, eine Formgebungsstation 22 und eine Druckstation 23 umfassen bzw. aus diesen bestehen. In der ersten Station 21 können die einzelnen Schichten für die Herstellung des Grundkörpers 6, also beispielsweise die Kernschicht 8 und die Dekorschichten 7, 9 bzw. weitere Schichten entsprechenden dem gewünschten Schichtaufbau aufeinander gelegt und gegebenenfalls aufgeheizt werden, falls der Grundkörper 6 mehrschichtig ausgebildet ist. In der folgenden Formgebungsstation 22 kann diesem vorerst ebenen Grundkörper 6 die gewünschte Form in einer Presse verliehen werden und können gegebenenfalls die einzelnen Schichten miteinander verbunden werden. Es ist gegebenenfalls möglich, dass die Station 21 und die Formgebungsstation 22 zusammengefasst werden, sodass die Schichtmaterialien direkt in der Formgebungsstation 22 aufeinander gelegt, verformbar und in Form gebracht sowie miteinander verbunden werden. Es ist weiter möglich, dass der Grundkörper 6 bereits in seiner endgültigen Form hergestellt wird. Die Stationen 21 und/oder 22 können dem Stand der Technik entsprechend ausgebildet bzw. eingesetzt werden. Sie können mit zumindest einem Beschnittelement für das Kfz-Innenausstattungsbauteil 1 ausgerüstet sein. Ein gegebenenfalls notwendiger Beschnitt kann aber auch in einem gesonderten Werkzeug erfolgen.

Nach der Formgebungsstation 22 folgt die Druckstation 23, in der das Anbauelement 2 mit dem Druckkopf 16 (Fig. 7) hergestellt wird. Diese Druckstation 23 kann dabei eine Bearbeitungskammer bzw. Bearbeitungskabine aufweisen, in der der Druckkopf 16 und gegebenenfalls der Roboter 17 angeordnet ist bzw. sind. Die Bearbeitungskammer bzw. Bearbeitungskabine kann geschlossen ausgeführt sein. Die Druckstation 23 kann direkt im Anschluss an die Formgebungsstation 22 angeordnet sein. Es ist aber auch möglich, dass der Druck nach einer Zwischenlagerung des Anbauelementes 2 im Zuge der Endfertigung (die auch die Qualitätskontrolle, etc. umfassen kann) erfolgt.

Es ist vorgesehen, dass der Grundkörper 6 des Kfz-Innenausstattungsbauteils 1 zumindest im Bereich, in dem das Anbauelement 2 hergestellt bzw. aufgedruckt wird, vor dem Aufdrucken des Anbauelementes 2 erwärmt wird. Insbesondere kann der Grundkörper 6 (in Abhängigkeit seines Werkstoffes) auf eine Temperatur erwärmt werden, die ausgewählt ist aus einem Bereich von 50 °C bis 200 °C bzw. ausgewählt ist aus einem Bereich von 30 % bis 80 % der Schmelztemperatur des Kunststoffes aus dem das Anbauelement 2 hergestellt wird. Bei mehreren verwendeten Kunststoffen ist dies die Temperatur des bei der niedrigsten Temperatur schmelzenden Kunststoffes.

Die Temperierung des Grundkörpers 6 kann beispielsweise mittels Infrarotstrahler, Heißluft, heißer Stempel, etc., erfolgen.

Es kann weiter vorgesehen werden, dass am Beginn das Aufdrucken des Anbauelementes 2 auf den Grundkörper 6 mit einer ersten Temperatur und am Ende mit einer zweiten Temperatur erfolgt, wobei die erste Temperatur meist höher ist als die zweite Temperatur.

Gemäß einer Ausführungsvariante dazu kann vorgesehen werden, dass das Aufdrucken des Anbauelementes 2 auf den Grundkörper 6 unter Anwendung eines Temperaturgradienten zwischen der ersten Temperatur und der zweiten Temperatur erfolgt. Der Temperaturgradient kann ausgewählt sein aus einem Bereich von 1 °C/Schichtauftrag bis 10 °C/ Schichtauftrag.

Es kann weiter vorgesehen werden, dass das Anbauelement 2 mit einem Härtegradienten hergestellt wird. Der Härtegradient kann beispielsweise durch entsprechende Daten und/oder Materialwahl gesteuert werden, wobei aufgrund der Daten und/oder Materialwahl die Rohstoffzusammensetzung zur Herstellung des Anbauelementes 2 geändert wird. Die 3D-Druckeinrichtung kann dazu mehr als einen Vorratsbehälter 19 aufweisen, in denen unterschiedliche polymere Kunststoffe bzw. Rohmaterialien hierfür enthalten sind.

Sofern das Anbauteil 2 als sichtbares Verstärkungselement an einer Oberfläche des Kfz-Innenausstattungsbauteils 1 ausgeführt wird, kann dieses auch in Form einer Beschriftung ausgebildet sein.

Darüber hinaus können die oberflächlich aufgedruckten Verstärkungselemente in definierten Bereichen, welche für die Bauteilsteifigkeit entscheidend sind, aufgebracht werden. Mit der Werkstoffauswahl kann die Steifigkeit sowohl bei Raumtemperatur als auch bei höheren Temperaturen beeinflusst werden.

Mit der Bauteilbeschriftung können gleichzeitig auch Montagepfeile oder sonstige relevanten Kennzeichnungen in verschiedenen Farben an Bauteilen angebracht werden.

Die Ausführungsbeispiele zeigen mögliche Ausführungsvarianten des Kfz-Innenausstattungsbauteils 1, der 3D-Druckeinrichtung und der Produktionslinie 20.

Der Ordnung halber sei abschließend darauf hingewiesen, dass zum besseren Verständnis des Aufbaus des Kfz-Innenausstattungsbauteils 1, der 3D-Druckeinrichtung und der Produktionslinie 20 diese bzw. deren Bestandteile teilweise unmaßstäblich und/oder vergrößert und/oder verkleinert dargestellt wurden.

**Bezugszeichenaufstellung**
- 1: Kfz-Innenausstattungsbauteil
- 2: Anbauelement
- 3: Oberseite
- 4: Unterseite
- 5: Stirnseite
- 6: Grundkörper
- 7: Dekorschicht
- 8: Kernschicht
- 9: Dekorschicht
- 10: Ausnehmung
- 11: Hinterschneidung
- 12: Ausnehmung
- 13: Hinterschneidung
- 14: Verstärkungselement
- 15: Hohlraum
- 16: Druckkopf
- 17: Roboter
- 18: Leitung
- 19: Vorratsbehälter
- 20: Produktionslinie
- 21: Station
- 22: Formgebungsstation
- 23: Druckstation

## Patentansprüche

1. Verfahren zur Herstellung eines Kfz-Innenausstattungsbauteils (1) aus einem Grundkörper (6) mit einer Oberseite (3) und einer Unterseite (4), wobei auf dem Grundkörper (6) ein Anbauelement (2) auf Basis zumindest eines polymeren Kunststoffs angeordnet wird, das mittels eines 3D-Druckverfahrens hergestellt wird, **dadurch gekennzeichnet, dass** der Grundkörper (6) zumindest im Bereich, in dem das Anbauelement (2) hergestellt wird, vor dem Herstellen des Anbauelementes (2) erwärmt wird.

2. Verfahren nach Anspruch 1, **dadurch gekennzeichnet, dass** das Anbauelement (2) als Befestigungselement, Halteelement, Verstärkungselement, akustisch wirksames Element, optisches Element, dämpfendes oder ausgleichendes Element ausgebildet wird.

3. Verfahren nach Anspruch 1 oder 2, **dadurch gekennzeichnet, dass** das Anbauelement (2) auf der Oberseite (3) oder der Unterseite (4) des Grundkörpers (6) hergestellt wird.

4. Verfahren nach Anspruch 3, **dadurch gekennzeichnet, dass** das Anbauelement (2) den Grundkörper (6) stirnseitig zumindest teilweise umgreifend hergestellt wird.

5. Verfahren nach Anspruch 4, **dadurch gekennzeichnet, dass** in zumindest einer Stirnfläche des Grundkörpers (6) eine, insbesondere hinterschnittene, Ausnehmung 12 ausgebildet wird und das Anbauelement (2) bis in die Ausnehmung 12 reichend hergestellt wird.

6. Verfahren nach einem der Ansprüche 1 bis 5, **dadurch gekennzeichnet, dass** in den Grundkörper (6) eine Ausnehmung (10) eingebracht wird und das Anbauelement (2) beginnend in der Ausnehmung (10) hergestellt wird.

7. Verfahren nach Anspruch 6, **dadurch gekennzeichnet, dass** die Ausnehmung (10) mit einer Hinterschneidung (11) hergestellt wird.

8. Verfahren nach Anspruch 6 oder 7, **dadurch gekennzeichnet, dass** der Grundkörper (6) aus einer Kernschicht (8) hergestellt wird, auf der beidseitig jeweils zumindest eine Dekorschicht (7, 9) aufgebracht wird und dass über den Teil des Anbauelementes (2) der in der Ausnehmung (10) angeordnet wird, die beiden Dekorschichten (7, 9) miteinander verbunden werden.

9. Verfahren nach einem der Ansprüche 1 bis 8, **dadurch gekennzeichnet, dass** am Beginn der Herstellung des Anbauelementes (2) auf dem Grundkörper (6) mit einer ersten Temperatur und am Ende mit einer zweiten Temperatur erfolgt, wobei die erste Temperatur höher ist als die zweite Temperatur.

10. Verfahren nach Anspruch 9, **dadurch gekennzeichnet, dass** das Herstellen des Anbauelementes (2) auf den Grundkörper (6) unter Anwendung eines Temperaturgradienten zwischen der ersten Temperatur und der zweiten Temperatur erfolgt.

11. Verfahren nach einem der Ansprüche 1 bis 10, **dadurch gekennzeichnet, dass** aus zumindest einem zweiten Werkstoff in dem Anbauelement (2) zumindest ein, gegebenenfalls Verstärkungsfasern aufweisendes, Verstärkungselement (14) mittels 3D-Druck ausgebildet wird.

12. Verfahren nach einem der Ansprüche 1 bis 11, **dadurch gekennzeichnet, dass** das Anbauelement (2) mit einem Härtegradienten hergestellt wird.

## Claims

1. A method for producing a motor vehicle interior trim component (1) from a base body (6) having an upper side (3) and a bottom side (4), wherein an extension element (2) on the basis of at least one polymer plastic is arranged on the base body (6), which extension element (2) is produced by means of a 3D printing method, **characterized in that** before producing the extension element (2), the base body (6) is heated at least in the region in which the extension element (2) is produced.

2. The method according to claim 1, **characterized in that** the extension element (2) is configured as a fastening element, holding element, reinforcing element, acoustically effective element, optical element, damping or compensating element.

3. The method according to claim 1 or 2, **characterized in that** the extension element (2) is produced on the upper side (3) or the bottom side (4) of the base body (6).

4. The method according to claim 3, **characterized in that** the extension element (2) is produced so as to at least partially embrace the base body (6) on the front side.

5. The method according to claim 4, **characterized in that** in at least one end face of the base body (6), a, particularly undercut, recess 12 is formed and the extension element (2) is produced so as to extend into the recess 12.

6. The method according to one of claims 1 to 5, **characterized in that** a recess (10) is introduced into the base body (6), and the extension element (2) is produced so as to start in the recess (10).

7. The method according to claim 6, **characterized in that** the recess (10) is produced having an undercut (11).

8. The method according to claim 6 or 7, **characterized in that** the base body (6) is produced from a core layer (8), on each side of which at least one decor layer (7, 9) is applied, and that the two decor layers (7, 9) are connected to each other via the part of the extension element (2) which is arranged in the recess (10).

9. The method according to one of claims 1 to 8, **characterized in that** at the beginning of the production of the extension element (2) on the base body (6) is carried out at a first temperature and at the end at a second temperature, wherein the first temperature is higher than the second temperature.

10. The method according to claim 9, **characterized in that** producing the extension element (2) on the base body (6) is carried out under the application of a temperature gradient between the first temperature and the second temperature.

11. The method according to one of claims 1 to 10, **characterized in that** at least one reinforcing element (14), possibly having reinforcing fibers, is formed in the extension element (2) from at least a second material by means of 3D printing.

12. The method according to one of claims 1 to 11, **characterized in that** the extension element (2) is produced with a hardness gradient.

## Revendications

1. Procédé de fabrication d'un composant d'équipement interne d'un véhicule automobile (1) à partir d'un corps de base (6) avec un côté supérieur (3) et un côté inférieur (4), dans lequel, sur le corps de base (6), est disposé un élément rapporté (2) constitué d'au moins une matière plastique polymère, qui est fabriqué au moyen d'un procédé d'impression 3D, **caractérisé en ce que** le corps de base (6) est chauffé avant la fabrication de l'élément rapporté (2) au moins dans la zone dans laquelle l'élément rapporté (2) est fabriqué.

2. Procédé selon la revendication 1, **caractérisé en ce que** l'élément rapporté (2) est conçu comme un élément de fixation, un élément de maintien, un élément de renforcement, un élément acoustiquement actif, un élément optique, un élément amortisseur ou compensateur.

3. Procédé selon la revendication 1 ou 2, **caractérisé en ce que** l'élément rapporté (2) est fabriqué sur le côté supérieur (3) ou le côté inférieur (4) du corps de base (6).

4. Procédé selon la revendication 3, **caractérisé en ce que** l'élément rapporté (2) est fabriqué de façon à entourer le corps de base (6) au moins partiellement sur la face frontale.

5. Procédé selon la revendication 4, **caractérisé en ce que**, dans au moins une face frontale du corps de base (6), est réalisé un évidement 12, plus particulièrement avec une contre-dépouille et l'élément rapporté (2) est fabriqué de façon à arriver jusque dans l'évidement 12.

6. Procédé selon l'une des revendications 1 à 5, **caractérisé en ce que**, dans le corps de base (6) est réalisé un évidement (10) et l'élément rapporté (2) est fabriqué en commençant dans l'évidement (10).

7. Procédé selon la revendication 6, **caractérisé en ce que** l'évidement (10) est fabriqué avec une contre-dépouille (11).

8. Procédé selon la revendication 6 ou 7, **caractérisé en ce que** le corps de base (6) est fabriqué à partir d'une couche centrale (8) sur laquelle, sur chacun des deux côtés, est appliquée une couche de décoration (7, 9) et **en ce que**, au-dessus de la partie de l'élément rapporté (2) qui est disposée dans l'évidement (10), les deux couches de décoration (7, 9) sont reliées entre elles.

9. Procédé selon l'une des revendications 1 à 8, **caractérisé en ce que** le début de la fabrication de l'élément rapporté (2) sur le corps de base (6) a lieu avec une première température et la fin de la fabrication a lieu avec une deuxième température, dans lequel la première température est supérieure à la deuxième température.

10. Procédé selon la revendication 9, **caractérisé en ce que** la fabrication de l'élément rapporté (2) sur le corps de base (6) a lieu en utilisant un gradient de température entre la première température et la deuxième température.

11. Procédé selon l'une des revendications 1 à 10, **caractérisé en ce que**, à partir d'au moins un deuxième matériau dans l'élément rapporté (2), est réalisé, par impression 3D, au moins un élément de renforcement (14), le cas échéant comprenant des fibres de renforcement.

12. Procédé selon l'une des revendications 1 à 11, **caractérisé en ce que** l'élément rapporté (2) est fabriqué avec un gradient de dureté.
